# EUROPEAN PATENT APPLICATION

(11) **EP 4 170 394 A1**
(43) Date of publication of application: **26.04.2023**
(21) Application number: 21829278.7
(22) Date of filing: 21.06.2021
(51) Int. Cl.: G02B 5/08, G02B 5/26, B32B 7/023

(54) **FILM MIRROR LAMINATE AND MIRROR MEMBER**

(30) Priority: 22.06.2020 JP 2020107154
(71) Applicant: NITTO DENKO CORPORATION, Ibaraki-shi Osaka 567-8680 (JP)
(72) Inventor: TANAKA, Kazuki, Ibaraki-shi, Osaka 567-8680 (JP); NAKAJIMA, Kazuhiro, Ibaraki-shi, Osaka 567-8680 (JP); NASHIKI, Tomotake, Ibaraki-shi, Osaka 567-8680 (JP)
(74) Representative: Hoffmann Eitle
(86) International application number: PCT/JP2021/023372
(87) International publication number: WO 2021/261433

(57) **Abstract**

The present invention relates to a film mirror laminate including a substrate film, an optical adjustment layer, a metal reflective layer, and an adhesive layer in this order, and a mirror member including the film mirror laminate and a support substrate, in which the film mirror laminate is attached to the support substrate via the adhesive layer.

## Description

### TECHNICAL FIELD

The present invention relates to a film mirror laminate and a mirror member.

### BACKGROUND ART

A driver of a vehicle gazes ahead through a windshield, and drives the vehicle while looking at instruments on an instrument panel. That is, the line of sight moves forward and downward to the instruments. If the driver can see the instruments while looking ahead, there is no movement of the line of sight, and an increase in drivability (finally, safety) can be expected. From this finding, head-up display devices have been developed and put into practical use.

In a head-up display device, an image from a light source is formed as a virtual image on a windshield in a dashboard device, and the image is visually recognized by a driver. In order to project image information from the light source without a decrease in luminance, a mirror surface body having a high reflectance is required.

From a viewpoint of increasing driving safety, a head-up display, which requires less movement of a viewpoint, is attracting more and more attention day by day, and a demand for a mirror surface body used as a reflecting mirror of the display is also increasing. From viewpoints of a low risk of breakage due to an accident such as a collision of a vehicle, a light weight, and the like, as a support substrate constituting the mirror surface body, a plastic substrate, particularly a polycarbonate substrate or the like is used because of its high heat resistance.

In a related-art method of producing a mirror surface body, a method of forming a metal thin film on a polycarbonate substrate with a batch-type vapor deposition/sputtering apparatus is typically used. However, the batch-type producing method has low production efficiency, and has a problem of causing supply shortages though a demand for a mirror surface body increases day by day. Thus, a mirror surface body that can be produced with high productivity is desired.

On the other hand, a film mirror that can be attached to a support has been studied. For example, Patent Literature 1 discloses a film mirror including at least a light reflecting layer, a resin substrate, and an adhesive layer that is formed of an acrylic adhesive, and the film mirror is used in a reflecting device for solar thermal power generation.

### CITATION LIST

### PATENT LITERATURE

Patent Literature 1: JP2015-210335A

### SUMMARY OF INVENTION

### TECHNICAL PROBLEM

The inventors have studied a film mirror that achieves producing a mirror member that can be used as a mirror surface body with high productivity by being allowed to adhere to a support substrate made of a resin. However, it has been found that a mirror member in which a related-art film mirror is attached to a support substrate made of a resin with an adhesive may be easily released, and adhesion of the mirror and substrate is not sufficient for use as a mirror surface body in a head-up display device.

Therefore, there is a demand for a film mirror laminate and a mirror member that can be efficiently produced, can be easily applied to a complicated curved surface shape or the like, have excellent adhesion, and have a good reflectance.

The present invention has been made in view of the above circumstances, and an object of the present invention is to provide a film mirror laminate and a mirror member that can be efficiently produced, can be easily applied to a complicated curved surface shape or the like, have excellent adhesion, and have a good reflectance.

### SOLUTION TO PROBLEM

As a result of intensive studies, the present inventors have found that laminating a substrate film, an optical adjustment layer, a metal reflective layer, and an adhesive layer in this order, allows for producing a film mirror laminate and a mirror member that can be efficiently produced, can be easily applied to a complicated curved surface shape or the like, have excellent adhesion, and have a good reflectance, and that this solves the above problems.

That is, the present invention is as follows.
[1] A film mirror laminate, including a substrate film, an optical adjustment layer, a metal reflective layer, and an adhesive layer in this order.
[2] The film mirror laminate according to [1], in which the optical adjustment layer includes a first low refractive index layer, a high refractive index layer, and a second low refractive index layer, and in which the film mirror laminate includes the substrate film, the first low refractive index layer, the high refractive index layer, the second low refractive index layer, the metal reflective layer, and the adhesive layer in this order.
[3] The film mirror laminate according to [2], in which the first low refractive index layer and the second low refractive index layer contain silicon oxide.
[4] The film mirror laminate according to [2] or [3], in which the high refractive index layer contains niobium oxide.
[5] The film mirror laminate according to any one of [1] to [4], in which a reflectance measured by irradiation with visible light having a wavelength of 380 nm to 780 nm from the substrate film side is 90% or more.
[6] The film mirror laminate according to any one of [1] to [5], in which the metal reflective layer contains any one of at least one metal selected from aluminum (Al), zinc (Zn), lead (Pb), copper (Cu), and silver (Ag), and an alloy containing the metal as a main component.
[7] A mirror member including the film mirror laminate according to any one of [1] to [6], and a support substrate, in which the film mirror laminate is attached to the support substrate via the adhesive layer.

### ADVANTAGEOUS EFFECTS OF INVENTION

The present invention can provide a film mirror laminate and a mirror member that can be efficiently produced, can be easily applied to a complicated curved surface shape or the like, have excellent adhesion, and have a good reflectance.

### BRIEF DESCRIPTION OF DRAWINGS

FIG. 1 is a schematic cross-sectional view of a film mirror laminate according to an embodiment of the present invention.
FIG. 2 is a schematic cross-sectional view of a film mirror laminate according to an embodiment of the present invention.
FIG. 3 is a schematic cross-sectional view of a mirror member according to an embodiment of the present invention.
FIG. 4 is a schematic cross-sectional view of a mirror member in Comparative Example 1.

### DESCRIPTION OF EMBODIMENTS

Hereinafter, embodiments of the present invention will be described in detail. The present invention is not limited to the embodiments to be described below.

### [Film Mirror Laminate]

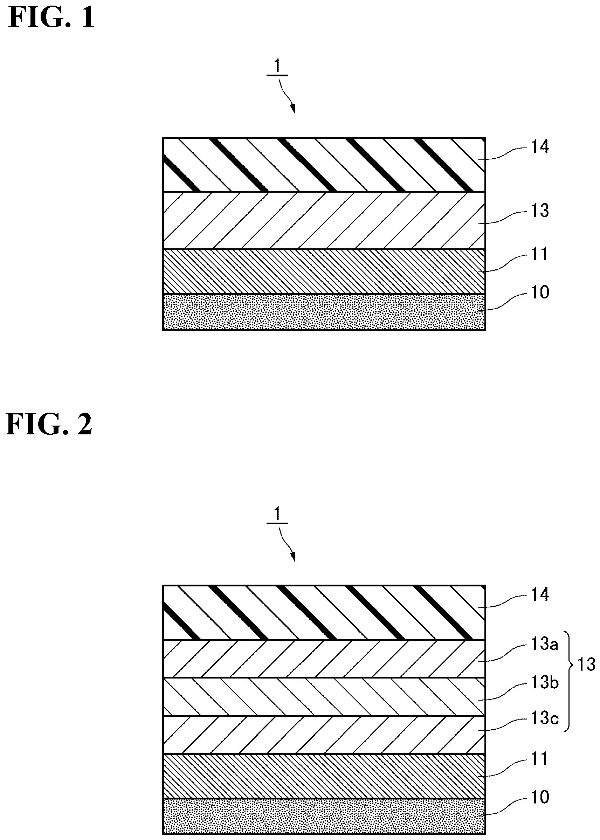

FIG. 1 illustrates a schematic cross-sectional view of a film mirror laminate 1 according to an embodiment of the present invention. The film mirror laminate 1 includes a substrate film 14, an optical adjustment layer 13, a metal reflective layer 11, and an adhesive layer 10 in this order.

The film mirror laminate 1 according to the present embodiment can be used by attaching a surface of the adhesive layer 10 on a side opposite to a metal reflective layer 11 side to a support substrate.

This configuration of the film mirror laminate 1 according to the present embodiment allows the substrate film to be an outermost layer when attached to the support substrate, and can form a mirror member that can be efficiently produced, can be easily applied to a complicated curved surface shape or the like, have excellent adhesion, and have a good reflectance.

In the film mirror laminate 1 according to the present embodiment, a reflectance measured by irradiation with visible light having a wavelength of 380 nm to 780 nm from a substrate film side is preferably 90% or more, and more preferably 95% or more. Setting the reflectance to 90% or more achieves that the film mirror laminate 1 has a function as a reflecting mirror.

The reflectance of the film mirror laminate 1 according to the present embodiment means a reflectance measured for the mirror member in which the film mirror laminate is attached to the support substrate via the adhesive layer, and can be measured by a method described in Examples.

### <Substrate Film>

The substrate film 14 is not limited, but for example, a film made of a homopolymer or a copolymer such as polyethylene terephthalate (PET), polyethylene naphthalate (PEN), polybutylene terephthalate, polyamide, polyvinyl chloride, polycarbonate (PC), cycloolefin polymer (COP), polystyrene, polypropylene (PP), polyethylene, polycycloolefin, polyurethane, acrylic (PMMA), and ABS can be used. These members are transparent, have little optical absorption, and do not affect a visual effect. Various layers are to be formed on the substrate film 14 later, and thus, a material that can withstand a high temperature in vapor deposition, sputtering, and the like is preferable. Therefore, among the above materials, for example, polyethylene terephthalate, polyethylene naphthalate, acrylic, polycarbonate, cycloolefin polymer, ABS, polypropylene, and polyurethane are preferred. Among these, polyethylene terephthalate, cycloolefin polymer, polycarbonate, and acrylic are preferred in terms of a good balance between a heat resistance and a cost. The substrate film 14 may be a single-layer film or a laminated film.

From a viewpoint of ease of processing and the like, a thickness is preferably, for example, about 6 µm to 250 µm. The thickness is more preferably 20 µm or more, and still more preferably 40 µm or more. The thickness is more preferably 100 µm or less, and still more preferably 75 µm or less. In order to increase an adhesion force to the layers formed on the substrate film, a plasma treatment, an easy adhesion treatment, or the like may be performed on the substrate film.

A hard coat layer such as a smooth or antiglare hard coat layer may be formed on the substrate film 14 as necessary. Providing the hard coat layer allows for increasing a scratch resistance.

The hard coat layer may be formed of a hard coat composition. Specifically, the hard coat layer may be formed by applying a solution containing a curable resin, as the hard coat composition, to the substrate film 14.

Examples of the curable resin include a thermosetting resin, an ultraviolet curable resin, and an electron beam curable resin. Examples of the curable resin include various resins such as a polyester resin, an acrylic resin, a urethane resin, an acrylic urethane resin, an amide resin, a silicone resin, a silicate resin, an epoxy resin, a melamine resin, an oxetane resin, and an acrylic urethane resin. One or more of these curable resins can be appropriately selected and used. Among these, an acrylic resin, an acrylic urethane resin, and an epoxy resin are preferred as these resins have high hardness, can be cured with ultraviolet rays, and are excellent in productivity.

A thickness of the hard coat layer is preferably 0.5 µm or more, and more preferably 1.0 µm or more, and is preferably 10 µm or less, more preferably 7.0 µm or less, and still more preferably 5.0 µm or less. The thickness of the hard coat layer can be measured with, for example, a film thickness meter (digital dial gauge).

### <Optical Adjustment Layer>

The film mirror laminate 1 according to the embodiment of the present invention includes the optical adjustment layer 13 between the substrate film 14 and the metal reflective layer 11.

The film mirror laminate 1 according to the embodiment of the present invention includes the optical adjustment layer 13, and this allows for adjusting a reflection spectrum according to a wavelength of light to increase a reflectance in a visible light region.

The optical adjustment layer 13 is preferably a layer made of a metal oxide and/or a metal nitride. A metal element contained in the metal oxide and the metal nitride referred to herein includes a metalloid element such as Si. The metal oxide and/or the metal nitride includes metal oxynitride. The metal oxide may be an oxide of a single metal element (single oxide) or an oxide of a plurality of metal elements (composite oxide). Similarly, the metal nitride may be a nitride of a single metal element (single nitride) or a nitride of a plurality of metal elements (composite nitride).

Examples of the metal element include Ce, Nb, Si, Sb, Ti, Ta, Zr, and Zn.

More specific examples of a material of the optical adjustment layer 13 include CeO₂ (2.30), NbO (2.33), Nb₂O₃ (2.15), Nb₂O₅ (2.32), SiO₂ (1.46), SiN (2.03), Sb₂O₃ (2.10), TiO₂ (2.35), Ta₂O₅ (2.10), ZrO₂ (2.05), ZnO (2.10), and ZnS (2.30) (numerical values in parentheses for the above materials are respective refractive indices).

In particular, the optical adjustment layer 13 preferably contains at least one metal element selected from Nb, Si, and Ti, and for example, preferably contains at least one selected from Nb₂O₅, SiO₂, and TiO₂.

A thickness of the optical adjustment layer 13 is preferably 10 nm to 500 nm. From a viewpoint of a cost, the thickness is more preferably 300 nm or less, and still more preferably 200 nm or less. In addition, from a viewpoint of tint, the thickness is preferably 15 nm or more, more preferably 20 nm or more, and still more preferably 30 nm or more.

The thickness of the optical adjustment layer 13 may be measured, for example, with a transmission electron microscope after exposing a cross section of the layer in a direction perpendicular to a surface (thickness direction).

A refractive index of the optical adjustment layer 13 is preferably 1.9 or more, and more preferably 2.0 or more. In addition, from a viewpoint of thickness controllability, the refractive index of the optical adjustment layer 13 is preferably 3.5 or less, and more preferably 3.0 or less.

The optical adjustment layer 13 may be a laminate of layers having different refractive indices, or may include a low refractive index layer and a high refractive index layer.

A low refractive index layer having a refractive index of about 1.35 to 1.55 preferably contains, as a low refractive index material, silicon oxide, magnesium fluoride, or the like, and more preferably contains silicon oxide.

A high refractive index layer having a refractive index of about 1.80 to 2.40 preferably contains, as a high refractive index material, titanium oxide, niobium oxide, zirconium oxide, tin-doped indium oxide (ITO), antimony-doped tin oxide (ATO), or the like, and more preferably contains niobium oxide.

In addition to the low refractive index layer and the high refractive index layer, for example, a thin film made of titanium oxide or a mixture of the low refractive index material and the high refractive index material described above (a mixture of titanium oxide and silicon oxide, or the like) may be formed as a medium refractive index layer having a refractive index of about 1.50 to 1.85.

In the film mirror laminate 1 according to the embodiment of the present invention, the optical adjustment layer preferably includes a first low refractive index layer, a high refractive index layer, and a second low refractive index layer.

For example, as shown in FIG. 2, the film mirror laminate 1 may be a laminate including the substrate film 14, a first low refractive index layer 13a, a high refractive index layer 13b, a second low refractive index layer 13c, the metal reflective layer 11, and the adhesive layer 10 in this order.

The first low refractive index layer and the second low refractive index layer preferably contain silicon oxide.

A thickness of the first low refractive index layer is preferably 5 nm or more, and more preferably 10 nm or more, from a viewpoint of a function as an anticorrosion layer. In addition, the thickness is preferably 50 nm or less, more preferably 30 nm or less, and still more preferably 20 nm or less, from a viewpoint of adjusting a visible light reflection spectrum to a desired range.

A thickness of the high refractive index layer is preferably 10 nm or more, more preferably 20 nm or more, and still more preferably 30 nm or more, from a viewpoint of adjusting a visible light reflection spectrum to a desired range. In addition, the thickness is preferably 200 nm or less, more preferably 150 nm or less, and still more preferably 100 nm or less, from the viewpoint of adjusting the visible light reflection spectrum to the desired range.

A thickness of the second low refractive index layer is preferably 10 nm or more, more preferably 20 nm or more, and still more preferably 30 nm or more, from a viewpoint of adjusting a visible light reflection spectrum to a desired range. In addition, the thickness is preferably 200 nm or less, more preferably 150 nm or less, and still more preferably 100 nm or less, from the viewpoint of adjusting the visible light reflection spectrum to the desired range.

Examples of a laminated configuration of the optical adjustment layer 13 include, from a substrate film 14 side, a two-layered configuration of a high refractive index layer having a film thickness of 240 nm to 260 nm and a low refractive index layer having a film thickness of 120 nm to 140 nm; a three-layered configuration of a medium refractive index layer having a film thickness of 170 nm to 180 nm, a high refractive index layer having a film thickness of about 60 nm to 70 nm, and a low refractive index layer having a film thickness of about 135 nm to 145 nm; a four-layered configuration of a high refractive index layer having a film thickness of 25 nm to 55 nm, a low refractive index layer having a film thickness of 35 nm to 55 nm, a high refractive index layer having a film thickness of 80 nm to 240 nm, and a low refractive index layer having a film thickness of 120 nm to 150 nm; and a five-layered configuration of a low refractive index layer having a film thickness of 15 nm to 30 nm, a high refractive index layer having a film thickness of 20 nm to 40 nm, a low refractive index layer having a film thickness of 20 nm to 40 nm, a high refractive index layer having a film thickness of 240 nm to 290 nm, and a low refractive index layer having a film thickness of 100 nm to 200 nm. Ranges of a refractive index and a film thickness of each thin film constituting the optical adjustment layer 13 are not limited to the above examples. The optical adjustment layer 13 may be a laminate of six or more thin films.

The film mirror laminate 1 may include a plurality of optical adjustment layers 13.

For example, some oxides, such as niobium oxide, are reduced when exposed to ultraviolet light in a state of being laminated with an adhesive, and a layer made of silicon oxide may be further laminated as a protective layer in order to prevent a reduction action.

### <Metal Reflective Layer>

The metal reflective layer 11 in the present embodiment is formed on the optical adjustment layer 13. The metal reflective layer 11 is preferably a layer having metallic luster. A material for forming the metal reflective layer 11 is not limited, but may include a metal and a resin. The metal reflective layer 11 may be a metal layer.

A case where the metal reflective layer 11 is a metal layer will be described.

It is desirable that the metal reflective layer 11 is formed of a metal having a relatively low melting point as well as having sufficient brilliance. This is because the metal reflective layer 11 is preferably formed by thin film growth with sputtering. For this reason, a metal having a melting point of about 1000°C or less is suitable as the metal reflective layer 11, and for example, the metal reflective layer 11 preferably contains any one of at least one metal selected from aluminum (Al), zinc (Zn), lead (Pb), copper (Cu), and silver (Ag), and an alloy containing the metal as a main component.

In particular, from viewpoints of brilliance, stability, prices, and the like of a substance, Al and an alloy thereof are preferred. When an aluminum alloy is used, an aluminum content of the alloy is preferably 50 mass% or more.

A thickness of the metal reflective layer 11 is typically preferably 20 nm or more so as to exhibit sufficient brilliance, and is typically preferably 100 nm or less from viewpoints of a sheet resistance and electromagnetic wave permeability. For example, the thickness is preferably 20 nm to 100 nm, and more preferably 30 nm to 70 nm. This thickness is also suitable for forming a uniform film with high productivity, and an appearance of a mirror member is good when the mirror member produced by attaching the film mirror laminate 1 to a support substrate is used as a mirror surface body.

### <Adhesive Layer>

The adhesive layer 10 may be formed of an adhesive.

The adhesive forming the adhesive layer 10 is preferably a transparent adhesive, and for example, an acrylic adhesive, a rubber adhesive, a silicone adhesive, a polyester adhesive, a urethane adhesive, an epoxy adhesive, and a polyether adhesive may be used alone or in combination of two or more thereof. From viewpoints of transparency, processability, durability, and the like, an acrylic adhesive is preferably used.

The adhesive layer 10 is preferably protected by a release liner until the adhesive layer 10 is attached to an adherend member.

The adhesive forming the adhesive layer 10 is preferably formed of an adhesive composition (hereinafter, sometimes simply referred to as an "adhesive composition") containing a base polymer. As the base polymer, a known polymer used for the adhesive may be used. Here, the base polymer refers to a main component of a polymer contained in the adhesive composition. In this description, the "main component" refers to a component contained in an amount of more than 50 mass%, unless otherwise specified.

### (Adhesive Composition)

The adhesive composition preferably contains a (meth)acrylic polymer as the base polymer. A part of monomers constituting the (meth)acrylic polymer may be contained as unreacted monomers in the adhesive composition.

The (meth)acrylic polymer in the embodiment of the present invention is preferably a hydroxy group-containing (meth)acrylic polymer containing an alkyl(meth)acrylate and a hydroxy group-containing monomer as monomer units. A method of introducing a hydroxy group is not limited, and for example, a method of copolymerizing a hydroxy group-containing monomer can be easily performed.

The (meth)acrylic polymer in the embodiment of the present invention refers to an acrylic polymer and/or a methacrylic polymer, the (meth)acrylate refers to an acrylate and/or a methacrylate, and the alkyl(meth)acrylate refers to alkyl acrylate and/or alkyl methacrylate.

Examples of the alkyl(meth)acrylate include methyl(meth)acrylate, ethyl(meth)acrylate, propyl(meth)acrylate, butyl(meth)acrylate, and 2-ethylhexyl(meth)acrylate. These compounds may be used alone or in combination of two or more thereof.

Examples of the hydroxy group-containing monomer include 2-hydroxyethyl(meth)acrylate, 2-hydroxypropyl(meth)acrylate, 4-hydroxybutyl(meth)acrylate, 6-hydroxyhexyl(meth)acrylate, 8-hydroxyoctyl(meth)acrylate, 10-hydroxydecyl(meth)acrylate, 12-hydroxylauryl(meth)acrylate, (4-hydroxymethylcyclohexyl)methyl acrylate, N-methylol(meth)acrylamide, N-hydroxy(meth)acrylamide, vinyl alcohol, allyl alcohol, 2-hydroxyethyl vinyl ether, 4-hydroxybutyl vinyl ether, and diethylene glycol monovinyl ether. These monomers may be used alone or in combination of two or more thereof.

The hydroxy group-containing monomers may be used alone or in combination of two or more thereof, and a total content of the hydroxy group-containing monomer is preferably 1 part by mass to 40 parts by mass, and more preferably 2 parts by mass to 30 parts by mass with respect to 100 parts by mass of the (meth)acrylic polymer. Copolymerizing a hydroxy group-containing monomer allows for producing a hydroxy group-containing (meth)acrylic polymer to which a reaction point due to crosslinking or the like is imparted.

The (meth)acrylic polymer to be used in the embodiment of the present invention preferably has a weight average molecular weight of about 300,000 to 2,500,000. When the weight average molecular weight is less than 300,000, a cohesive force of the adhesive composition tends to be reduced to cause adhesive residue. The weight average molecular weight is obtained by measurement with gel permeation chromatography (GPC).

From a viewpoint of easy balance of an adhesive performance, a glass transition temperature (Tg) of the (meth)acrylic polymer is preferably 0°C or less (typically -100°C or more), and more preferably -10°C or less. When the glass transition temperature is higher than 0°C, the polymer is difficult to flow. The glass transition temperature (Tg) of the (meth)acrylic polymer may be adjusted within the above range by appropriately changing monomer components to be used and a composition ratio.

In addition to the above monomers, other polymerizable monomers such as a polymerizable monomer for adjusting a glass transition point and releasability of the (meth)acrylic polymer may be used as long as effects of the present invention are not impaired.

As the other polymerizable monomers to be used in the (meth)acrylic polymer, for example, a component for increasing a cohesive force and a heat resistance such as a sulfonic acid group-containing monomer, a phosphoric acid group-containing monomer, a cyano group-containing monomer, a vinyl ester monomer, and an aromatic vinyl monomer, and a component having a functional group acting as an adhesive strength increase or a crosslinking base point such as an acid anhydride group-containing monomer, an amide group-containing monomer, an amino group-containing monomer, an epoxy group-containing monomer, N-acryloylmorpholine, and a vinyl ether monomer may be appropriately used. These monomer compounds may be used alone or in combination of two or more thereof.

Examples of the cyano group-containing monomer include acrylonitrile and methacrylonitrile.

Examples of the vinyl ester monomer include vinyl acetate, vinyl propionate, and vinyl laurate.

Examples of the aromatic vinyl monomer include styrene, chlorostyrene, chloromethylstyrene, and α-methylstyrene.

Examples of the amide group-containing monomer include acrylamide, diethylacrylamide, and N-vinyl-2-pyrrolidone.

Examples of the amino group-containing monomer include N,N-dimethylaminoethyl(meth)acrylate, N,N-dimethylaminopropyl(meth)acrylate, N-(meth)acryloylmorpholine, and (meth)acrylic acid alkylaminoalkyl ester.

Examples of the epoxy group-containing monomer include glycidyl(meth)acrylate and allyl glycidyl ether.

Examples of the vinyl ether monomer include methyl vinyl ether, ethyl vinyl ether, and isobutyl vinyl ether.

In the embodiment of the present invention, the other polymerizable monomers may be used alone or in combination of two or more thereof, and a total content of the other polymerizable monomer is preferably 0 part by mass to 40 parts by mass, and more preferably 0 part by mass to 30 parts by mass with respect to 100 parts by mass of the (meth)acrylic polymer.

A polymerization method of the (meth)acrylic polymer is not limited, and a known polymerization method such as solution polymerization, emulsion polymerization, suspension polymerization, and UV polymerization may be adopted. An obtained copolymer may be any of a random copolymer, a block copolymer, a graft copolymer, and the like.

In the embodiment of the present invention, the adhesive composition may contain a polymer component other than the above base polymer.

In the embodiment of the present invention, the adhesive composition preferably contains a crosslinking agent, and an isocyanate-based crosslinking agent is preferably used as the crosslinking agent. The isocyanate-based crosslinking agent is used for imparting adhesion and cohesiveness.

As the isocyanate-based crosslinking agent, a polyfunctional isocyanate compound is used, and the polyfunctional isocyanate compound includes various compounds having two or more isocyanate groups in the molecule.

Examples of the isocyanate compound include lower aliphatic polyisocyanates such as butylene diisocyanate and hexamethylene diisocyanate; alicyclic isocyanates such as cyclopentylene diisocyanate, cyclohexylene diisocyanate, and isophorone diisocyanate; aromatic isocyanates such as 2,4-tolylene diisocyanate, 4,4'-diphenylmethane diisocyanate, and xylylene diisocyanate; and isocyanate adducts such as a trimethylolpropane/tolylene diisocyanate trimer adduct (trade name: Coronate L, manufactured by Nippon Polyurethane Industry Co., Ltd.), a trimethylolpropane/hexamethylene diisocyanate trimer adduct (trade name: Coronate HL, manufactured by Nippon Polyurethane Industry Co., Ltd.), and an isocyanurate of hexamethylene diisocyanate (trade name: Coronate HX, manufactured by Nippon Polyurethane Industry Co., Ltd.). Among these, those having an isocyanurate ring are particularly preferred, and examples thereof include a polyisocyanate having a long-chain alkylene diol-modified isocyanurate ring (Burnock DN-995, manufactured by Dainippon Ink and Chemicals, Inc.) and an isocyanurate of hexamethylene diisocyanate (trade name: Coronate HX, manufactured by Nippon Polyurethane Industry Co., Ltd.). These compounds may be used alone or in combination.

The crosslinking agent to be used in the embodiment of the present invention may be blended to the extent that the crosslinking agent does not affect adhesive properties, and is typically contained in an amount of 0.2 part by mass to 10 parts by mass, preferably 0.5 part by mass to 8 parts by mass, and more preferably 1 part by mass to 6 parts by mass, with respect to 100 parts by mass of the (meth)acrylic polymer.

In the embodiment of the present invention, the adhesive composition also preferably contains a polyfunctional (meth)acrylic monomer such as 1,6-hexanediol diacrylate as a crosslinking component. The (meth)acrylic monomer in the embodiment of the present invention refers to an acrylic monomer and/or a methacrylic monomer.

The polyfunctional (meth)acrylic monomer is typically contained in an amount of 0.2 part by mass to 10 parts by mass, preferably 0.5 part by mass to 8 parts by mass, and more preferably 1 part by mass to 6 parts by mass, with respect to 100 parts by mass of the (meth)acrylic polymer.

In the acrylic adhesive, a crosslinking agent (polyamine compound, melamine resin, aziridine derivative, urea resin) other than those exemplified above, a polymerization initiator, a tackifier, a plasticizer, a silane coupling agent, a colorant, a powder of a pigment or the like, a dye, a surfactant, a surface lubricant, a leveling agent, a softener, an antioxidant, an antistatic agent, an anti-aging agent, a light stabilizer, an ultraviolet absorber, a polymerization inhibitor, an inorganic or organic filler, a metal powder, a particle-like matter, a foil-like matter, or the like may also be appropriately used. These components may be used alone or in combination of two or more thereof.

### (Method for Forming Adhesive Layer)

The adhesive layer may be formed, for example, by applying the adhesive composition onto the metal reflective layer 11 and removing a solvent and the like by drying. In the application of the adhesive composition, one or more solvents may be appropriately added.

The adhesive layer may also be formed, for example, by bonding the metal reflective layer 11 to a surface of an adhesive layer side of a laminate of a protective film and an adhesive layer formed on the protective film with the adhesive composition.

A thickness of the adhesive layer is preferably 1 µm to 300 µm, more preferably 2 µm to 250 µm, still more preferably 3 µm to 250 µm, and yet still more preferably 5 µm to 100 µm.

The thickness of the adhesive layer can be measured by a dial gauge.

As a method of applying the adhesive composition, various methods may be used. Specific examples of the method include roll coating, kiss roll coating, gravure coating, reverse coating, roll brushing, spray coating, dip roll coating, bar coating, knife coating, air knife coating, curtain coating, lip coating, and extrusion coating with a die coater or the like.

A temperature of the heat-drying is preferably about 30°C to 200°C, more preferably 40°C to 180°C, and still more preferably 80°C to 160°C. Setting a heating temperature within the above range allows for providing an adhesive layer having excellent adhesive properties. For a drying time, an appropriate time may be adopted. The drying time is preferably about 5 seconds to 20 minutes, more preferably 30 seconds to 10 minutes, and still more preferably 1 minute to 8 minutes.

When the adhesive composition is an active energy ray-curable adhesive, the adhesive layer may be formed by irradiation with active energy rays such as ultraviolet rays. For the ultraviolet irradiation, a high-pressure mercury lamp, a low-pressure mercury lamp, a metal halide lamp, a chemical light lamp, or the like may be used.

The adhesive layer in the film mirror laminate can be protected by a release sheet (separator).

For example, at the time of shipment of the film mirror laminate, the adhesive layer is in a state of being protected by the release sheet. Thereafter, the release sheet is released, and the adhesive layer is bonded to the support substrate to produce a mirror member.

The release sheet is not limited as long as the release sheet can protect the adhesive layer, and examples of the release sheet include a porous material such as a plastic film, paper, cloth, and nonwoven fabric, and an appropriate thin sheet such as a net, a foam sheet, a metal foil, and a laminate thereof. A plastic film is preferably used because of its excellent surface smoothness.

Examples of the plastic film include a polyethylene film, a polypropylene film, a polybutene film, a polybutadiene film, a polymethylpentene film, a polyvinyl chloride film, a vinyl chloride copolymer film, a polyethylene terephthalate film, a polybutylene terephthalate film, a polyurethane film, and an ethylene-vinyl acetate copolymer film.

A thickness of the release sheet is basically about 5 µm to 200 µm, and preferably 5 µm to 100 µm. If necessary, the release sheet may be subjected to a release treatment and antifouling treatment with a silicone-based release agent, fluorine-based release agent, long-chain alkyl-based release agent, or fatty acid amide-based release agent, a silica powder, or the like, and may be subjected to an antistatic treatment of a coating type, a kneading type, a vapor deposition type, or the like. In particular, when a surface of the release sheet is appropriately subjected to a release treatment such as a silicone treatment, a long-chain alkyl treatment, or a fluorine treatment, releasability from the adhesive layer can be further enhanced.

The film mirror laminate according to the embodiment of the present invention may include other layers in addition to the substrate film 14, the optical adjustment layer 13, the metal reflective layer 11, and the adhesive layer 10 depending on applications.

Examples of the other layers include a hard coat layer, a barrier layer, an easyadhesion layer, an antireflection layer, a light extraction layer, and an antiglare layer.

### <Barrier Layer>

When the film mirror laminate according to the embodiment of the present invention includes a barrier layer, the barrier layer is preferably provided on a surface of the metal reflective layer 11 opposite to an optical adjustment layer 13 side.

The barrier layer is a layer for preventing oxidation (corrosion) of the metal reflective layer 11, and the barrier layer preferably contains at least one selected from the group consisting of an oxide, a nitride, a carbide, an oxynitride, an oxycarbide, a nitride carbide, and an oxynitride carbide of at least one of a metal and a metalloid. As the metal, for example, aluminum, titanium, indium, or magnesium may be used, and as the metalloid, for example, silicon, bismuth, or germanium may be used.

Specifically, for example, ZnO + Al₂O₃ (AZO), indium zinc oxide (IZO), indium tin oxide (ITO), a silicon oxycarbonitride film (SiOCN), a silicon oxynitride film (SiON), a silicon nitride film (SiN), SiOx, AlOx, AlON, or TiOx may be used. Among these, at least one selected from the group consisting of AZO, ITO, AlOₓ, and SiO₂ is preferably used, and AlOₓ is more preferably used.

For increasing a performance of the barrier layer to suppress the oxidation (corrosion) of the metal reflective layer 11 (hereinafter, also referred to as a "barrier property"), the barrier layer preferably contains carbon and nitrogen so as to make a network structure (mesh-like structure) in a barrier layer dense. Further, for increasing transparency, the barrier layer preferably contains oxygen. That is, the barrier layer preferably contains oxynitride carbide of at least one of a metal and a metalloid.

A thickness of the barrier layer is not limited, but is preferably 1 nm or more, more preferably 5 nm or more, and still more preferably 10 nm or more in order to increase the barrier property. In addition, the thickness is preferably 100 nm or less, more preferably 80 nm or less, and still more preferably 60 nm or less in order to increase a reflectance and a metallic luster feeling.

### [Manufacture of Film Mirror Laminate]

A method for manufacturing the film mirror laminate according to the embodiment of the present invention is not limited. For example, the first low refractive index layer 13a, the high refractive index layer 13b, the second low refractive index layer 13c, and the metal reflective layer 11 may be formed in this order on one surface of the substrate film 14. The adhesive layer 10 may be formed directly on a surface of the metal reflective layer 11 opposite to a second low refractive index layer 13c side by coating or the like of a composition capable of forming the adhesive layer 10, or may be formed by bonding a separately formed adhesive layer 10.

A method of forming the first low refractive index layer 13a, the high refractive index layer 13b, the second low refractive index layer 13c, and the metal reflective layer 11 is not limited, but examples of the method include a vacuum deposition, a sputtering, and an ion plating. The sputtering is preferred as a thickness can be strictly controlled even in a large area.

The film mirror laminate according to the embodiment of the present invention may be used for a mirror member.

The film mirror laminate according to the present embodiment may also be used for decoration of a member. For example, the film mirror laminate may be used by being attached to an adherend member, and for example, a member made of glass or plastic may be used as the adherend member, but the adherend member is not limited to these members.

### [Mirror Member]

A mirror member according to an embodiment of the present invention includes the film mirror laminate described above and a support substrate, and the film mirror laminate is attached to the support substrate via the adhesive layer.

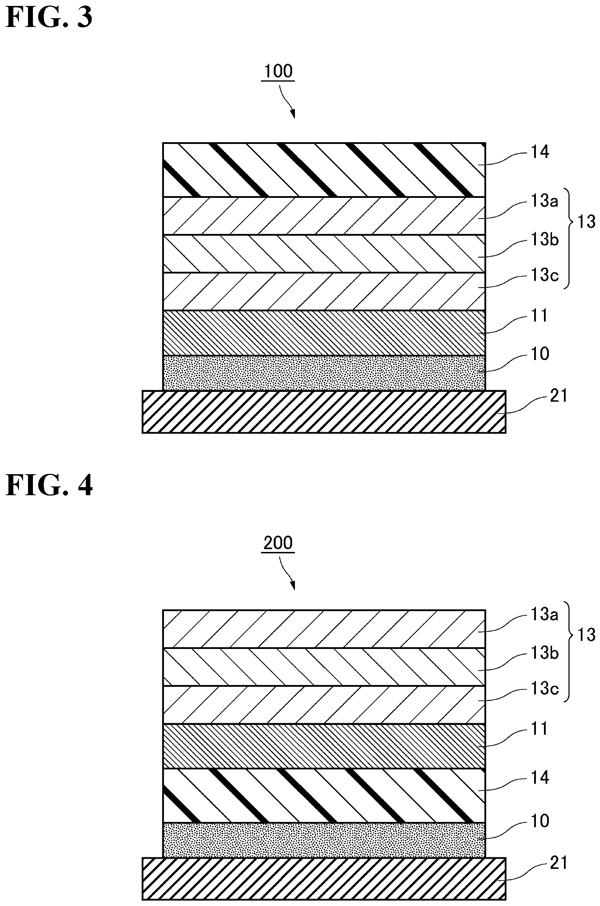

FIG. 3 is a schematic cross-sectional view of the mirror member according to the embodiment of the present invention. In a mirror member 100 shown in FIG. 3, the film mirror laminate including the substrate film 14, the first low refractive index layer 13a, the high refractive index layer 13b, the second low refractive index layer 13c, the metal reflective layer 11, and the adhesive layer 10 in this order is attached to a support substrate 21 via the adhesive layer 10.

The mirror member according to the embodiment of the present invention can be produced by attaching the film mirror laminate to the support substrate. Thus, the mirror member can be produced with high productivity, even when the support substrate is a member having a complicated curved surface shape.

The mirror member according to the embodiment of the present invention has an excellent scratch resistance. This is because the substrate film is an outermost layer.

### (Support Substrate)

A material of the support substrate is not limited, but examples of the material include a resin, glass, and a metal, and a resin is preferably used. Examples of the resin include a polyester resin such as polyethylene terephthalate (PET), polybutylene terephthalate, and polyethylene naphthalate; a (meth)acrylic resin (acrylic resin and/or methacrylic resin) such as polymethacrylate; an olefin resin such as polyethylene, polypropylene, and a cycloolefin polymer (for example, norbornene-based and cyclopentadiene-based polymers); a polycarbonate resin; a polyether sulfone resin; a polyarylate resin; a melamine resin; a polyamide resin; a polyimide resin; a cellulose resin; and a polystyrene resin. These materials may be used alone or in combination of two or more thereof. Among these, a polycarbonate resin is preferred as the polycarbonate resin can be made black and have excellent light shielding properties.

### [Applications of Film Mirror Laminate and Mirror Member]

Examples of applications of the film mirror laminate and the mirror member according to the present embodiments include a structural part for a vehicle, a vehiclemounted article such as a head-up display, a housing of an electronic device, a housing of a home appliance, a structural part, a machine part, various automobile parts, a part for an electronic device, an application for household goods such as furniture and kitchen goods, a medical device, a part of a building material, and other structural parts and exterior parts. More specific examples of the application in a vehicle field include an instrument panel, a console box, a door knob, a door trim, a shift lever, pedals, a glove box, a bumper, a hood, a fender, a trunk, a door, a roof, a pillar, a seat, a steering wheel, an ECU box, an electrical part, an engine peripheral part, a drive system/gear peripheral part, an intake/exhaust system part, and a cooling system part. More specific examples of the application for the electronic device and the home appliance include household electric appliances such as a refrigerator, a washing machine, a vacuum cleaner, a microwave oven, an air conditioner, a lighting device, an electric water heater, a television, a clock, a ventilation fan, a projector, and a speaker; and electronic information devices such as a personal computer, a mobile phone, a smartphone, a digital camera, a tablet PC, a portable music player, a portable game machine, a charger, and a battery.

### EXAMPLES

Hereinafter, the present invention will be described based on Examples, but the present invention is not limited thereto.

### [Example 1]

### [Production of Low Refractive Index Layer and High Refractive Index Layer]

As a substrate film, a PET film Lumirror (hereinafter, referred to as a film substrate) manufactured by Toray Industries, Inc. was prepared.

The film substrate was set in a magnetron sputtering apparatus, and thin films of transparent oxides were formed on one surface of the film substrate in an order of silicon oxide having a thickness of 20 nm (refractive index: 1.46) as a first low refractive index layer, niobium oxide (Nb₂O₅) having a thickness of 50 nm (refractive index: 2.32) as a high refractive index layer, and silicon oxide (SiO₂) having a thickness of 70 nm as a second low refractive index layer. In formation of the thin films of silicon oxide and niobium oxide, a pure silicon target and a pure niobium target were used as targets, oxygen gas was introduced in addition to argon gas, and reactive sputtering was performed to obtain the thin films of transparent oxides, respectively.

### (Film Forming Conditions of Silicon Oxide)

Ultimately degree of vacuum: 1.0 × 10⁻⁴ Pa
Sputtering gas: using Ar and O₂ and adjusting O₂/(Ar + O₂) to 0.3
Chamber pressure: 0.30 Pa
Substrate temperature: 25°C

### (Film Forming Conditions of Niobium Oxide)

Ultimately degree of vacuum: 1.0 × 10⁻⁴ Pa
Sputtering gas: using Ar and O₂ and adjusting O₂/(Ar + O₂) to 0.1
Chamber pressure: 0.30 Pa
Substrate temperature: 25°C

### [Production of Metal Reflective Layer]

The film substrate on which the first low refractive index layer, the high refractive index layer, and the second low refractive index layer were formed was set in the magnetron sputtering apparatus, and an aluminum layer (Al layer) having a thickness of 44 nm was formed as a metal reflective layer on the second low refractive index layer using an Al target.

### (Formation Conditions of Al Layer)

Ultimately degree of vacuum: 1.0 × 10⁻⁴ Pa
Sputtering gas: Ar
Chamber pressure: 0.30 Pa
Substrate temperature: 25°C

### [Production of Barrier Layer]

The film substrate on which the first low refractive index layer, the high refractive index layer, the second low refractive index layer, and the Al layer were formed was set in the magnetron sputtering apparatus, and an aluminum oxide layer (Al₂O₃ layer) having a thickness of 20 nm was formed as a barrier layer on the Al layer using an Al target.

### (Formation Conditions of Aluminum Oxide Layer)

Ultimately degree of vacuum: 1.0 × 10⁻⁴ Pa
Sputtering gas: using Ar and O₂ and adjusting O₂/(Ar + O₂) to 0.1
Chamber pressure: 0.30 Pa
Substrate temperature: 25°C

As described above, a laminate 1 in which thin layers were formed on the one surface of the PET substrate having a thickness of 50 µm in an order of silicon oxide having a thickness of 20 nm, niobium oxide having a thickness of 50 nm, silicon oxide having a thickness of 70 nm, aluminum having a thickness of 44 nm, and aluminum oxide having a thickness of 20 nm, was prepared.

### [Production of Adhesive Layer]

### [Preparation of Adhesive Composition 1]

### (Preparation of Oligomer Composition 1)

60 parts by mass of dicyclopentanyl methacrylate (DCPMA) and 40 parts by mass of methyl methacrylate (MMA) as monomer components, 3.5 parts by mass of α-thioglycerol as a chain transfer agent, and 100 parts by mass of toluene as a polymerization solvent were mixed, and stirred at 70°C for 1 hour in a nitrogen atmosphere. Next, 0.2 part by mass of 2,2'-azobisisobutyronitrile (AIBN) was added as a thermal polymerization initiator, and the reaction was performed at 70°C for 2 hours. The reaction temperature was raised to 80°C and the reaction was performed for 2 hours. Thereafter, a reaction solution was heated to 130°C and dried to remove the toluene, the chain transfer agent, and an unreacted monomer, thereby obtaining a solid acrylic oligomer (oligomer composition 1). The oligomer composition 1 had a weight average molecular weight of 5,100 and a glass transition temperature (Tg) of 130°C.

### (Polymerization of Prepolymer Composition 1)

67 parts by mass of 2-ethylhexyl acrylate (2EHA), 15 parts by mass of N-vinyl-2-pyrrolidone (NVP), 3 parts by mass of hydroxyethyl acrylate (HEA), and 15 parts by mass of 4-hydroxybutyl acrylate (4-HBA) as monomer components, and 0.05 part by mass of "Irgacure 651" (trade name, manufactured by BASF) and 0.05 part by mass of "Irgacure 184" (trade name, manufactured by BASF) as photopolymerization initiators were blended. After that, this monomer mixture was partially photopolymerized by being exposed to ultraviolet rays in a nitrogen atmosphere, thereby obtaining a prepolymer composition 1 (polymerization rate of about 10%).

### (Preparation of Adhesive Composition 1)

To 100 parts by mass of the obtained prepolymer composition 1, 5 parts by mass of the oligomer composition 1, 0.3 part by mass of 1,6-hexanediol diacrylate (trade name "A-HD-N", manufactured by Shin-Nakamura Chemical Co., Ltd.), and 0.3 part by mass of a silane coupling agent (trade name "KBM-403 ", manufactured by Shin-Etsu Chemical Co., Ltd.) were added and uniformly mixed to obtain an adhesive composition 1. A gel fraction was 82%.

### [Production of Adhesive Sheet]

### (Adhesive Sheet 1)

A polyethylene terephthalate (PET) film ("DIAFOIL MRF75" manufactured by Mitsubishi Chemical Corporation) having a thickness of 75 µm and including a silicone-based release layer on a surface of the film was used as a substrate (heavy release film), and the adhesive composition 1 was applied onto the substrate so as to have a thickness of 25 µm to form a coating layer. A PET film ("DIAFOIL MRE75" manufactured by Mitsubishi Chemical Corporation) having a thickness of 75 µm and including one surface subjected to a silicone release treatment was attached as a cover sheet (light release film) onto the coating layer.

This laminate was irradiated with ultraviolet rays from a cover sheet side using a black light whose position was adjusted such that an irradiation intensity on an irradiation surface immediately below a lamp was 5 mW/cm², and photo-cured, thereby obtaining an adhesive sheet formed by an adhesive layer having a thickness of 25 µm.

### [Production of Film Mirror Laminate and Mirror Member]

The light release film of the adhesive sheet having a thickness of 25 µm produced as described above was released, and the adhesive sheet was allowed to bond to a surface of the substrate film of the laminate 1 on which a sputtering film was formed (surface on which the aluminum oxide layer was formed), so as to produce a film mirror laminate.

The heavy release film on an adhesive layer side of the film mirror laminate was released, and the film mirror laminate was allowed to bond to a polycarbonate substrate (Carboglass, black, manufactured by Asahi Glass Co., Ltd.) having a thickness of 5.0 mm as a support substrate, so as to produce a mirror member. A size of a test piece was 50 mm × 150 mm.

### [Example 2]

A laminate 2 in which thin layers were formed on one surface of a PET substrate having a thickness of 50 µm in an order of silicon oxide having a thickness of 20 nm, niobium oxide having a thickness of 50 nm, silicon oxide having a thickness of 70 nm, and aluminum having a thickness of 44 nm was produced in the same manner as in Example 1 except that the aluminum oxide layer was not provided as the protective layer.

A light release film of an adhesive sheet having a thickness of 25 µm produced in the same manner as in Example 1 was released, and the adhesive sheet was allowed to bond to a surface of a substrate film of the laminate 2 on which a sputtering film was formed (surface on which an aluminum layer was formed), so as to produce a film mirror laminate. A mirror member shown in FIG. 3 was produced in the same manner as in Example 1. In the mirror member 100 in Example 2 shown in FIG. 3, the film mirror laminate including the substrate film 14, the first low refractive index layer 13a, the high refractive index layer 13b, the second low refractive index layer 13c, the metal reflective layer 11, and the adhesive layer 10 in this order is attached to the support substrate 21 via the adhesive layer 10.

### [Comparative Example 1]

### [Production of Metal Reflective Layer]

As a film substrate, a PET film Lumirror (hereinafter, referred to as a film substrate) manufactured by Toray Industries, Inc. was prepared. An Al target was set in a magnetron sputtering apparatus, and an aluminum layer (Al layer) having a thickness of 44 nm was formed as a metal reflective layer on one surface of the film substrate.

### (Formation Conditions of Al Layer)

Ultimately degree of vacuum: 1.0 × 10⁻⁴ Pa
Sputtering gas: Ar
Chamber pressure: 0.30 Pa
Substrate temperature: 25°C

### [Production of Low Refractive Index Layer and High Refractive Index Layer]

The film substrate on which the Al layer was formed was set in the magnetron sputtering apparatus, and thin films of transparent oxides were formed on the Al layer in an order of silicon oxide having a thickness of 70 nm (refractive index: 1.46) as a second low refractive index layer, niobium oxide (Nb₂O₅) having a thickness of 50 nm (refractive index: 2.32) as a high refractive index layer, and silicon oxide (SiO₂) having a thickness of 20 nm as a first low refractive index layer. In formation of the thin films of silicon oxide and niobium oxide, a pure silicon target and a pure niobium target were used as targets, oxygen gas was introduced in addition to argon gas, and reactive sputtering was performed to obtain the thin films of the transparent oxides, respectively.

### (Film Forming Conditions of Silicon Oxide)

Ultimately degree of vacuum: 1.0 × 10⁻⁴ Pa
Sputtering gas: using Ar and O₂ and adjusting O₂/(Ar + O₂) to 0.3
Chamber pressure: 0.30 Pa
Substrate temperature: 25°C

### (Film Forming Conditions of Niobium Oxide)

Ultimately degree of vacuum: 1.0 × 10⁻⁴ Pa
Sputtering gas: using Ar and O₂ and adjusting O₂/(Ar + O₂) to 0.1
Chamber pressure: 0.30 Pa
Substrate temperature: 25°C

As described above, a laminate 3 in which thin layers were formed on the one surface of the PET substrate having a thickness of 50 µm in an order of aluminum having a thickness of 44 nm as a metal reflective layer, silicon oxide having a thickness of 70 nm as a second low refractive index layer, niobium oxide having a thickness of 50 nm as a high refractive index layer, and silicon oxide having a thickness of 20 nm as a first low refractive index layer, was produced.

### [Production of Film Mirror Laminate and Mirror Member]

A light release film of the adhesive sheet 1 having a thickness of 25 µm produced in the same manner as in Example 1 was released, and the adhesive sheet 1 was allowed to bond to a surface of the substrate film of the laminate 3 on which no sputtering film was formed, so as to produce a film mirror laminate.

A mirror member shown in FIG. 4 was produced in the same manner as in Example 1. In a mirror member 200 in Comparative Example 1 shown in FIG. 4, a film mirror laminate including the adhesive layer 10, the substrate film 14, the metal reflective layer 11, the second low refractive index layer 13c, the high refractive index layer 13b, and the first low refractive index layer 13a in this order is attached to the support substrate 21 via the adhesive layer.

### <Reflectance Measurement>

Using Hitachi spectrophotometer U-4100 manufactured by Hitachi High-Technologies Corporation, reflectances of the produced mirror members in the Examples and the Comparative Example were measured. The reflectances were measured using, as a light incident surface, a PET substrate surface in Examples 1 and 2 and the first low refractive index layer in Comparative Example 1, respectively.

### <Adhesion Test (Condition of 110°C)>

The produced mirror members in the Examples and the Comparative Example were held at a high temperature for 1000 hours, and then subjected to an adhesion test.

The holding at the high temperature was performed by putting the mirror member into a constant temperature and humidity apparatus manufactured by Espec Corporation which was set at 110°C for 1000 hours.

The adhesion test was performed in accordance with a cross-cut tape test JIS K 5400, a cross-cut test method (adhesion test of coating). As for an operation of pressing and releasing a tape, the release was performed once, an angle was changed to 90 degrees, the tape was pressed and released again, and the release of a grid pattern was observed. Then, the number of squares in which the release occurred among 100 squares was counted. When 1/4 or more of an area of one square was released due to the tape release, the square was counted as a release.

### <Adhesion Test (Condition of 65°C and 95% RH)>

The produced mirror members in the Examples and the Comparative Example were held at a high temperature and a high humidity for 1000 hours, and then subjected to an adhesion test in the same manner as the adhesion test (condition of 110°C) described above.

The holding at the high temperature and the high humidity was performed by putting the mirror member into a constant temperature and humidity apparatus manufactured by Espec Corporation which was set at 65°C and 95% RH for 1000 hours.

A measurement result and a test result for each of the Examples and the Comparative Example are shown in Table 1 below.

**[Table 1]**

| | | Example 1 | Example 2 | Comparative Example 1 |
|---|---|---|---|---|
| Adhesion test | 110°C | 0/100 | 0/100 | 3/100 |
| | 65°C and 95% RH | 0/100 | 0/100 | 19/100 |
| Reflectance (%) | | 92.1 | 92.1 | 94.7 |

As described above, the film mirror laminates according to the present examples had excellent adhesion and a good reflectance, and thus were suitable for a mirror member.

The film mirror laminates according to the present examples can be allowed to bond to a support substrate via an adhesive layer, can provide a mirror member with high productivity, and can be easily applied to a complicated curved surface shape or the like.

### INDUSTRIAL APPLICABILITY

The present invention allows for providing the film mirror laminate and the mirror member that can be efficiently produced, can be easily applied to a complicated curved surface shape or the like, have excellent adhesion, and have a good reflectance.

Although the present invention has been described in detail with reference to specific embodiments, it will be apparent to those skilled in the art that various changes and modifications can be made without departing from the spirit and the scope of the present invention.

The present application is based on Japanese Patent Application No. 2020-107154 filed on June 22, 2020, the contents of which are incorporated herein by reference.

### REFERENCE SIGNS LIST

- 1: film mirror laminate
- 10: adhesive layer
- 11: metal reflective layer
- 13: optical adjustment layer
- 13a: first low refractive index layer
- 13b: high refractive index layer
- 13c: second low refractive index layer
- 14: substrate film
- 21: support substrate
- 100, 200: mirror member

## Claims

1. A film mirror laminate, comprising:
a substrate film, an optical adjustment layer, a metal reflective layer, and an adhesive layer in this order.

2. The film mirror laminate according to claim 1,
wherein the optical adjustment layer includes a first low refractive index layer, a high refractive index layer, and a second low refractive index layer, and
wherein the film mirror laminate comprises the substrate film, the first low refractive index layer, the high refractive index layer, the second low refractive index layer, the metal reflective layer, and the adhesive layer in this order.

3. The film mirror laminate according to claim 2,
wherein the first low refractive index layer and the second low refractive index layer contain silicon oxide.

4. The film mirror laminate according to claim 2 or 3,
wherein the high refractive index layer contains niobium oxide.

5. The film mirror laminate according to any one of claims 1 to 4,
wherein a reflectance measured by irradiation with visible light having a wavelength of 380 nm to 780 nm from the substrate film side is 90% or more.

6. The film mirror laminate according to any one of claims 1 to 5,
wherein the metal reflective layer contains any one of at least one metal selected from aluminum (Al), zinc (Zn), lead (Pb), copper (Cu), and silver (Ag), and an alloy containing the metal as a main component.

7. A mirror member, comprising the film mirror laminate according to any one of claims 1 to 6, and a support substrate,
wherein the film mirror laminate is attached to the support substrate via the adhesive layer.
